# EUROPÄISCHE PATENTSCHRIFT

(11) **EP 3 690 407 B1**
(45) Veröffentlichungstag und Bekanntmachung des Hinweises auf die Patenterteilung: **08.09.2021**
(21) Anmeldenummer: 19154135.8
(22) Anmeldetag: 29.01.2019
(51) Int. Cl.: G01D 5/12

(54) **DREHDIMMER**
ROTARY DIMMER
RÉGULATEUR ROTATIF

(43) Veröffentlichungstag der Anmeldung: 05.08.2020
(73) Patentinhaber: Lunatone Industrielle Elektronik GmbH, 1210 Wien (AT)
(72) Erfinder: Mair, Alexander, 2285 Breitstetten (AT)
(74) Vertreter: Patentanwaltskanzlei Matschnig & Forsthuber OG

(56) Entgegenhaltungen:
- WO-A1-2009/102192
- WO-A1-2013/113896
- DE-U1-212016 000 224
- US-A1- 2017 278 383

## Beschreibung

Die Erfindung betrifft einen Drehdimmer zur Befestigung an einer Gebäudewand, umfassend einen an die Wand dauerhaft befestigbaren Basiskörper, der zur elektrischen Verbindung mit einem Lichtsteuersystem eingerichtet ist, und einen an dem Basiskörper um eine Achse drehbar gelagertes Bedienelement. Aus den Dokumenten WO 2009/102192 A1, WO 2013/113896 A1 und US 2017/0278383 A1 sind Drehdimmer bzw. Drehregler bekannt geworden.

Bisher wurden Drehdimmer mit einen Drehgeber ausgestattet, der zur Erfassung einer Drehbewegung eines Bedienelements eingerichtet war. Solche Drehgeber weisen ein Drehelement auf, das drehbar gelagert ist, wobei an dem Element eine entsprechende Sensorik angreift, die zur Erfassung der Drehbewegung eingerichtet ist. Die Erfassung kann dabei z.B. optisch oder durch Veränderung von einem Widerstandswert (siehe z.B. Potentiometer) erfolgen. Die Herstellung und der Einbau solcher Drehgeber sind kostenintensiv, da darin typischerweise mechanisch bewegte Bauteile zum Einsatz kommen, wobei die mechanische Bewegung mittels zusätzlicher Sensorik erfasst werden muss. Zudem können Drehgeber Verschleißerscheinungen unterliegen. Damit ist die Lebensdauer von Drehdimmern begrenzt, wobei gleichzeitig die Kosten zur Herstellung eines Drehdimmers beträchtlich sind.

Eine Aufgabe der Erfindung besteht daher darin, einen kostengünstigen, robusten Drehdimmer zu schaffen. Diese Aufgabe wird mit einem Drehdimmer der eingangs genannten Art gelöst, bei dem erfindungsgemäß innerhalb des Bedienelements ein Sensor angeordnet ist, der dazu eingerichtet ist, eine Drehbewegung des Bedienelements zu erfassen, wobei zwischen dem Bedienelement und dem Basiskörper eine elektrische Einrichtung zur Übertragung der von dem Sensor erfassten Lageinformation an den Basiskörper gemäß Anspruch 1 vorgesehen ist. Der Sensor ist dabei vollständig in dem Bedienelement aufgenommen, und zwar vorzugsweise so, dass dieser von den Außenbereich des Bedienelements umschlossen ist, ohne von außen sichtbar zu sein. Durch die Verwendung eines Sensors, der zur Messung der Drehlage des Bedienelements eingerichtet ist, kann der Einsatz von kostenintensiven Drehdimmern entfallen. Die Erfassung der Lage kann damit ohne Verwendung von mechanisch miteinander in Eingriff stehenden Teilen erfolgen, wobei als Sensor hierfür insbesondere ein einachsiger, zweiachsiger oder dreiachsiger Beschleunigungssensor eingesetzt sein kann. Die durch den Sensor erfasste Lage kann auf einfache Weise über eine entsprechend ausgebildete elektrische Einrichtung an den Basiskörper übertragen werden. Ebenso könnte bereits das Lagesignal in ein korrespondierendes Regelsignal umgewandelt werden, dass an den Basiskörper übertragen wird.

Um eine Vormontage des Basiskörpers in einer Gebäudewand und eine spätere Montage des Bedienelements zu ermöglichen, kann vorgesehen sein, dass die Lagerung des Bedienelements und die elektrische Einrichtung dergestalt eingerichtet ist, dass das Bedienelement zerstörungsfrei von dem Basiskörper getrennt und mit diesem wieder verbunden werden kann. So kann z.B. in Baustellenbereichen der Basiskörper, der kostengünstig und robust hergestellt sein kann, vorab montiert werden und mit dem Einsatz der Bedienelemente zugewartet werden, bis der Baustellenbereich vor der Fertigstellung steht. Auf diese Weise kann der Gefahr der Verschmutzung oder eines Diebstahls der Bedienelemente, die den Lagesensor beinhalten, vorgebeugt werden. Zudem ist es dadurch möglich ein defektes Bedienelement auf einfache Weise auszutauschen.

Zur einfacheren Handhabbarkeit kann vorgesehen sein, dass das drehbare Bedienelement als Drehknopf oder als Drehscheibe ausgebildet ist.

Vorzugsweise ist die elektrische Einrichtung dergestalt ausgebildet, dass diese eine unbegrenzte Drehbewegung des Bedienelements ohne Unterbrechung der elektrischen Verbindung zulässt.

Erfindungsgemäß ist vorgesehen, dass das Bedienelement mit dem Basiskörper über eine Drehwelle mechanisch verbunden ist, wobei die Achse zur Drehung des Bedienelements durch die Achse der Drehwelle ausgebildet ist, wobei die elektrische Einrichtung als Kontaktierung entlang der Drehwelle ausgebildet ist, indem an dem Außenmantel der Drehwelle voneinander elektrisch getrennte elektrische Kontaktabschnitte ausgebildet sind, mittels derer das Bedienelement mit dem Basiskörper zur Übertragung der Lageinformation elektrisch in Verbindung steht. Weiters könnte die elektrische Einrichtung 6 auch zusätzlich als NFC-Kommunikationsverbindung ausgebildet sein. Außerdem könnte eine "wireless-charging"-Verbindung zur Ladung etwaiger Energiespeicher des Bedienelements 5 vorgesehen sein. Außerdem könnte eine Kontaktierung über Scheiben erfolgen, die mit passenden Ringmagneten in Eingriff stehen.

Weiters kann vorgesehen sein, dass der Sensor oder eine damit verbundene Auswerteeinrichtung dazu eingerichtet ist, für die Drehlage eine Nullposition festzulegen, die durch die Lage des Bedienelements festgelegt wird, in der eine Verbindung durch die elektrische Einrichtung zwischen Bedienelement und Basiskörper zur Inbetriebnahme des Drehdimmers erstmals geschlossen wird, wobei eine Drehbewegung und eine damit verbundene Regelung in Relation zu der Nullposition bestimmt ist. Das bedeutet, dass die Nullage beim Einstecken des Bedienelements festgelegt wird. Wird das Bedienelement abgenommen und erneut eingesteckt, so wird die Nulllage neu definiert, nämlich basierend auf dem letzten Einsteckvorgang. Damit kann der Benutzer die Nulllage auf einfache Weise festlegen und schon nach dem Einsteckvorgang ausgehend von der Einstecklage direkt mit der Regelung beginnen.

Alternativ dazu kann vorgesehen sein, dass der Sensor oder eine damit verbundene Auswerteeinrichtung dazu eingerichtet ist, für die Drehlage eine Nullposition festzulegen, die ausschließlich durch die Lage des Bedienelements in Bezug auf das Gravitationsfeld der Erde festgelegt ist, wobei eine Drehbewegung und eine damit verbundene Regelung in Relation zu der Nullposition bestimmt ist. Es wird damit eine Absolutlage in Bezug auf das Erdgravitationsfeld bestimmt. Auf diese Weise ist es möglich, den Basiskörper vorab mit Markierungen passend zur Regelungsstufen zu versehen, auf die sich das Bedienelement dann beziehen kann. Außerdem ist es dadurch möglich, durch Einstecken des Bedienelements in der gewünschten Drehlage direkt ein Regelungssignal vorzugeben. Dies kann insbesondere bei Anwendungen günstig sein, in denen das Bedienelement ebenso als abnehmbares Fernbedienelement konzipiert ist.

Um eine weitere Möglichkeit der Eingabe durch das Bedienelement zu schaffen, kann vorgesehen sein, dass das drehbare Bedienelement, insbesondere ebenso die elektrische Einrichtung, in Achsrichtung federnd gelagert ist, wobei der Sensor ebenso zur Erfassung der größe der Beschleunigung entlang der Achse eingerichtet ist. Auf diese Weise können "Klicksignale", also Drucksignale in Achsrichtung, übertragen werden. So kann der Benutzer durch Drücken des Bedienelements weitere Einstellungen vornehmen. Beispielsweise kann eine Steuerung so eingerichtet sein, dass durch Drücken des Bedienelements oder durch Druckkombinationen (z.B. eine Kodierung in Abhängigkeit von Anzahl der Druckvorgänge und/oder Geschwindigkeit der Druckvorgänge) eine Änderung der Lichtfarbe vorgegeben werden kann.

Vorzugsweise kann vorgesehen sein, dass die Bestimmung der Lage des Bedienelements ausschließlich über einen einzigen Sensor erfolgt.

Insbesondere kann vorgesehen sein, dass das Bedienelement mit Ausnahme des Sensors und der elektrischen Kontaktierung frei von weiteren elektrischen Bauteilen ist. Weiters kann vorgesehen sein, dass das Bedienelement als kabelloses mobiles Fernbedienelement einsetzbar ist, indem innerhalb des Bedienelements ein Akku zur Versorgung des Lagesensors und ein Sendemodul zur kabellosen Datenübertragung an eine Empfangseinheit angeordnet ist, die zur Datenübertragung an das Lichtsteuersystem eingerichtet ist, wobei die elektrische Kontaktierung als zerstörungsfrei lösbare Steckverbindung ausgebildet ist. Der Akku kann beispielsweise durch die elektrische Kontaktierung geladen werden, wenn das Bedienelement mit dem Basiskörper verbunden ist. Die Empfangseinheit kann beispielsweise in den Basiskörper integriert oder mit diesem verbunden sein. Alternativ dazu kann die Empfangseinheit außerhalb des Basiskörpers angeordnet sein. Bei dieser Anordnung kann es sich um eine Anordnung an einer zentralen Stelle handeln, die für den Empfang und/oder die Ansteuerung des Lichtsystems vorteilhaft ist.

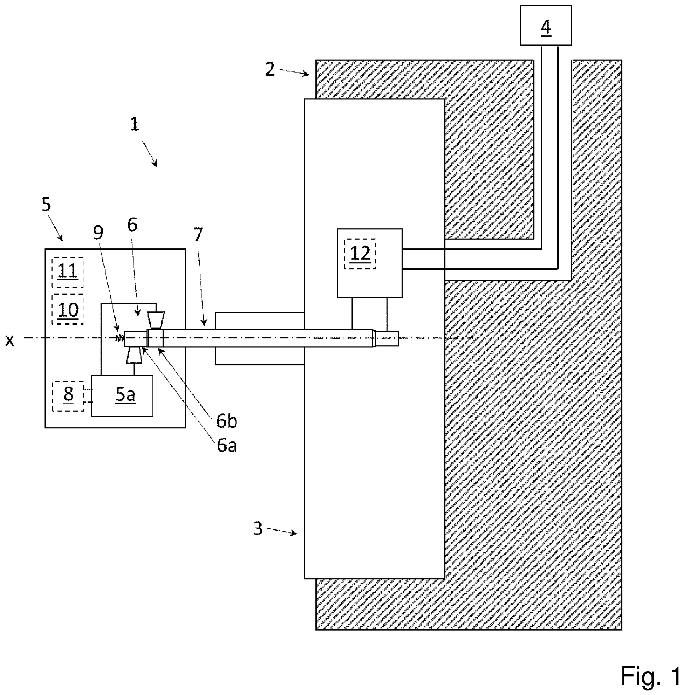

Die Erfindung ist im Folgenden anhand einer beispielhaften und nicht einschränkenden Ausführungsform näher erläutert, die in Figur 1 veranschaulicht ist.

Figur 1 zeigt eine schematische Darstellung eines erfindungsgemäßen Drehdimmers.

Der in Figur 1 dargestellte Drehdimmer 1 ist zur Befestigung an einer Gebäudewand 2 eingerichtet. Der Drehdimmer 1 umfasst einen an die Wand 2 dauerhaft befestigbaren Basiskörper 3, der zur elektrischen Verbindung mit einem Lichtsteuersystem 4 eingerichtet ist. Weiters umfasst der Drehdimmer 1 ein um eine Achse x drehbar an dem Basiskörper 3 gelagertes drehbares Bedienelement 5, wobei innerhalb des Bedienelements 5 ein Sensor 5a angeordnet ist, der dazu eingerichtet ist, eine Drehbewegung des Bedienelements 5 zu erfassen. Zwischen dem Bedienelement 5 und dem Basiskörper 3 ist eine elektrische Einrichtung 6 in Form einer Kontaktierung 6 angeordnet, die zur Übertragung der von dem Sensor 5a erfassten Lageinformation an den Basiskörper 3 eingerichtet ist. Alternativ dazu könnte die elektrische Einrichtung 6 auch beispielsweise als NFC-Kommunikationsverbindung eingerichtet sein. Außerdem könnte eine "wireless-charging"-Verbindung zur Ladung etwaiger Energiespeicher des Bedienelements 5 vorgesehen sein.

Vorzugsweise ist dabei der Sensor 5a als einachsiger, zweiachsiger oder dreiachsiger Beschleunigungssensor ausgebildet. Solche Sensoren sind kostengünstig herstellbar und weisen eine hohe Zuverlässigkeit auf.

Die Lagerung des Bedienelements 5 und die elektrische Kontaktierung 6 ist in dem gezeigten Ausführungsbeispiel dergestalt eingerichtet, dass das Bedienelement 5 zerstörungsfrei von dem Basiskörper 3 getrennt und mit diesem wieder verbunden werden kann. Gleichzeitig ist die elektrische Kontaktierung 6 dergestalt ausgebildet, dass diese eine unbegrenzte Drehbewegung des Bedienelements 5 ohne Unterbrechung der elektrischen Verbindung der elektrischen Kontaktierung 6 zulässt. Konkret wird dies erreicht, indem das Bedienelement 5 an dem Basiskörper 3 über eine Drehwelle 7 mechanisch gehalten ist, wobei die Achse x zur Drehung des Bedienelements 5 durch die Achse der Drehwelle 7 ausgebildet ist. An dem Außenmantel der Drehwelle 7 sind voneinander elektrisch getrennte elektrische Kontaktabschnitte 6a, 6b ausgebildet, mittels derer das Bedienelement 5 mit dem Basiskörper 3 zur Übertragung der Lageinformation elektrisch in Verbindung steht. Der elektrische Kontakt kann dabei durch an der Welle 7 angreifende schleifende oder gleitende Kontaktmittel hergestellt werden. Im Bereich des Basiskörpers 3 kann die Welle 7 korrespondierend zu den Kontaktabschnitten 6b und 6a kontaktieret werden, wobei die Welle 7 in Bezug auf den Basiskörper 3 feststehend ausgebildet sein kann. Natürlich kann diese Konstruktion auch mechanisch umgekehrt werden. Im Prinzip können verschiedenste Arten der elektrischen Steckverbindung zum Einsatzkommen. So können beispielsweise ebenso aus der Audiotechnik bekannte Klinkenverbindungen Verwendung finden.

Es kann vorgesehen sein, dass der Sensor 5a oder eine damit verbundene Auswerteeinrichtung 8 dazu eingerichtet ist, für die Drehlage eine Nullposition festzulegen, die durch die Lage des Bedienelements 5 festgelegt wird, in der die elektrische Kontaktierung 6 zwischen Bedienelement 5 und Basiskörper 3 zur Inbetriebnahme des Drehdimmers 1 erstmals geschlossen wird, wobei eine Drehbewegung und eine damit verbundene Regelung in Relation zu der Nullposition bestimmt ist.

Alternativ dazu könnte vorgesehen sein, dass der Sensor 5a oder eine damit verbundene Auswerteeinrichtung 8 dazu eingerichtet ist, für die Drehlage eine Nullposition festzulegen, die ausschließlich durch die Lage des Bedienelements 5 in Bezug auf das Gravitationsfeld der Erde festgelegt ist, wobei eine Drehbewegung und eine damit verbundene Regelung in Relation zu der Nullposition bestimmt ist.

Zudem kann vorgesehen sein, dass das drehbare Bedienelement 5, insbesondere ebenso die elektrische Kontaktierung 6, in Achsrichtung federnd gelagert ist, wobei der Sensor 5a ebenso zur Erfassung einer Bewegung entlang der Achse x eingerichtet ist. Hierfür kann im Bedienelement 5 oder im Basiskörper 3 ein Federelement 9 vorgesehen sein, dass eine Rückstellkraft bereitstellt, mit der das Bedienelement 5 in eine Ruhelage gedrückt wird.

Weiters kann optional vorgesehen sein, dass das Bedienelement 5 als kabelloses mobiles Fernbedienelement einsetzbar ist, indem innerhalb des Bedienelements 5 ein Akku 10 zur Versorgung des Lagesensors und ein Sendemodul 11 zur kabellosen Datenübertragung an eine Empfangseinheit 12 angeordnet ist, wobei die Empfangseinheit 12 in den Basiskörper 3 integriert oder mit diesem verbunden ist. Eine Ladung des Akkus 10 kann beispielsweise über die Kontaktierung 6 erfolgen, wobei die elektrische Kontaktierung 6 als zerstörungsfrei lösbare Steckverbindung ausgebildet ist.

## Patentansprüche

1. Drehdimmer (1) zur Befestigung an einer Gebäudewand (2), umfassend einen an die Wand (2) dauerhaft befestigbaren Basiskörper (3), der zur elektrischen Verbindung mit einem Lichtsteuersystem (4) eingerichtet ist, und ein an dem Basiskörper (3) um eine Achse (x) drehbar gelagertes Bedienelement (5), **dadurch gekennzeichnet, dass** innerhalb des Bedienelements (5) ein Sensor (5a) angeordnet ist, der dazu eingerichtet ist, eine Drehbewegung des Bedienelements (5) zu erfassen, wobei zwischen dem Bedienelement (5) und dem Basiskörper (3) eine elektrische Einrichtung (6) zur Übertragung der von dem Sensor (5a) erfassten Lageinformation an den Basiskörper (3) vorgesehen ist, wobei das Bedienelement (5) mit dem Basiskörper (3) über eine Drehwelle (7) mechanisch verbunden ist, wobei die Achse (x) zur Drehung des Bedienelements (5) durch die Achse der Drehwelle (7) ausgebildet ist, wobei die elektrische Einrichtung (6) als Kontaktierung entlang der Drehwelle (7) ausgebildet ist, indem an dem Außenmantel der Drehwelle (7) voneinander elektrisch getrennte elektrische Kontaktabschnitte (6a, 6b) ausgebildet sind, mittels derer das Bedienelement (5) mit dem Basiskörper (3) zur Übertragung der Lageinformation elektrisch in Verbindung steht.

2. Drehdimmer (1) nach Anspruch 1, wobei der Sensor (5a) als einachsiger, zweiachsiger oder dreiachsiger Beschleunigungssensor ausgebildet ist.

3. Drehdimmer (1) nach Anspruch 1 oder 2, wobei die Lagerung des Bedienelements (5) und die elektrische Einrichtung (6) dergestalt eingerichtet ist, dass das Bedienelement (5) zerstörungsfrei von dem Basiskörper (3) getrennt und mit diesem wieder verbunden werden kann.

4. Drehdimmer (1) nach einem der vorhergehenden Ansprüche, wobei das drehbare Bedienelement (5) als Drehknopf oder als Drehscheibe ausgebildet ist.

5. Drehdimmer (1) nach einem der vorhergehenden Ansprüche, wobei die elektrische Einrichtung (6) dergestalt ausgebildet ist, dass diese eine unbegrenzte Drehbewegung des Bedienelements (5) ohne Unterbrechung der elektrischen Verbindung der elektrischen Einrichtung (6) zulässt.

6. Drehdimmer (1) nach einem der vorhergehenden Ansprüche, wobei der Sensor (5a) oder eine damit verbundene Auswerteeinrichtung (8) dazu eingerichtet ist, für die Drehlage eine Nullposition festzulegen, die durch die Lage des Bedienelements (5) festgelegt wird, in der eine elektrische Verbindung durch die Einrichtung (6) zwischen Bedienelement (5) und Basiskörper (3) zur Inbetriebnahme des Drehdimmers (1) erstmals geschlossen wird, wobei eine Drehbewegung und eine damit verbundene Regelung in Relation zu der Nullposition bestimmt ist.

7. Drehdimmer (1) nach einem der Ansprüche 1 bis 5, wobei der Sensor (5a) oder eine damit verbundene Auswerteeinrichtung (8) dazu eingerichtet ist, für die Drehlage eine Nullposition festzulegen, die ausschließlich durch die Lage des Bedienelements (5) in Bezug auf das Gravitationsfeld der Erde festgelegt ist, wobei eine Drehbewegung und eine damit verbundene Regelung in Relation zu der Nullposition bestimmt ist.

8. Drehdimmer (1) nach einem der vorhergehenden Ansprüche, wobei das drehbare Bedienelement (5), insbesondere ebenso die elektrische Kontaktierung (6), in Achsrichtung federnd gelagert ist, wobei der Sensor (5a) ebenso zur Erfassung der Größe einer Beschleunigung entlang der Achse (x) eingerichtet ist.

9. Drehdimmer (1) nach einem der vorhergehenden Ansprüche, wobei die Bestimmung der Lage des Bedienelements (5) ausschließlich über einen einzigen Sensor (5a) erfolgt.

10. Drehdimmer (1) nach einem der vorhergehenden Ansprüche, wobei das Bedienelement (5) mit Ausnahme des Sensors (5a) und der elektrischen Einrichtung (6) frei von weiteren elektrischen Bauteilen ist.

11. Drehdimmer (1) nach einem der Ansprüche 1 bis 9, wobei das Bedienelement (5) zusätzlich als kabelloses mobiles Fernbedienelement einsetzbar ist, indem innerhalb des Bedienelements (5) ein Akku (10) zur Versorgung des Lagesensors und ein Sendemodul (11) zur kabellosen Datenübertragung an eine Empfangseinheit (12) angeordnet ist, die zur Datenübertragung an das Lichtsteuersystem (4) eingerichtet ist, wobei die elektrische Einrichtung (6) als zerstörungsfrei lösbare Steckverbindung ausgebildet ist.

12. Drehdimmer (1) nach Anspruch 11, wobei die Empfangseinheit (12) in den Basiskörper (3) integriert oder mit diesem verbunden ist.

13. Drehdimmer (1) nach Anspruch 11, wobei die Empfangseinheit (12) außerhalb des Basiskörpers (3) angeordnet ist, wobei die Empfangseinheit (12) insbesondere an einer zentralen Empfangs- und/oder Steuerstelle angeordnet ist.

## Claims

1. Rotary dimmer (1) for fastening to a building wall (2), comprising a base body (3) which can be permanently fastened to the wall (2) and is set up for electrical connection to a light control system (4), and an operating element (5) which is mounted on the base body (3) such that it can be rotated about an axis (x), **characterized in that** a sensor (5a) is arranged within the operating element (5), which sensor (5a) is set up to detect a rotational movement of the operating element (5), an electrical device (6) being provided between the operating element (5) and the base body (3) for transmitting the positional information detected by the sensor (5a) to the base body (3), wherein the operating element (5) is mechanically connected to the base body (3) via a rotary shaft (7), wherein the axis (x) for rotation of the operating element (5) is formed by the axis of the rotary shaft (7), wherein the electrical device (6) is formed as a contact along the rotary shaft (7), **in that** electrical contact sections (6a, 6b) which are electrically separated from one another are formed on the outer casing of the rotary shaft (7), by means of which the operating element (5) is electrically connected to the base body (3) for transmitting the position information.

2. Rotary dimmer (1) according to claim 1, wherein the sensor (5a) is formed as a uniaxial, biaxial or triaxial acceleration sensor.

3. Rotary dimmer (1) according to claim 1 or 2, wherein the mounting of the operating element (5) and the electrical device (6) is set up in such a way that the operating element (5) can be separated from the base body (3) and reconnected to it without being destroyed.

4. Rotary dimmer (1) according to one of the preceding claims, wherein the rotatable operating element (5) is designed as a rotary knob or as a rotary disc.

5. Rotary dimmer (1) according to one of the preceding claims, wherein the electrical device (6) is designed in such a way that it permits an unlimited rotary movement of the operating element (5) without interrupting the electrical connection of the electrical device (6).

6. Rotary dimmer (1) according to one of the preceding claims, wherein the sensor (5a) or an evaluation device (8) connected thereto is set up to determine a zero position for the rotary position, which is determined by the position of the operating element (5) in which an electrical connection is closed for the first time by the device (6) between the operating element (5) and the base body (3) in order to put the rotary dimmer (1) into operation, a rotary movement and a control associated therewith being determined in relation to the zero position.

7. Rotary dimmer (1) according to any one of claims 1 to 5, wherein the sensor (5a) or an evaluation device (8) connected thereto is set up to determine a zero position for the rotary position, which is determined exclusively by the position of the operating element (5) in relation to the gravitational field of the earth, wherein a rotary movement and a control associated therewith is determined in relation to the zero position.

8. Rotary dimmer (1) according to one of the preceding claims, wherein the rotatable operating element (5), in particular likewise the electrical contact (6), is spring-mounted in the axial direction, wherein the sensor (5a) is likewise set up to detect the magnitude of an acceleration along the axis (x).

9. Rotary dimmer (1) according to one of the preceding claims, wherein the determination of the position of the operating element (5) is carried out exclusively via a single sensor (5a).

10. Rotary dimmer (1) according to one of the preceding claims, wherein the operating element (5) is free of further electrical components with the exception of the sensor (5a) and the electrical device (6).

11. Rotary dimmer (1) according to one of the claims 1 to 9, wherein the operating element (5) can additionally be used as a wireless mobile remote control element in that a rechargeable battery (10) for supplying the position sensor and a transmitter module (11) for wireless data transmission to a receiver unit (12), which is set up for data transmission to the light control system (4), are arranged within the operating element (5), wherein the electrical device (6) is designed as a non-destructively detachable plug connection.

12. Rotary dimmer (1) according to claim 11, wherein the receiving unit (12) is integrated in the base body (3) or connected thereto.

13. Rotary dimmer (1) according to claim 11, wherein the receiving unit (12) is arranged outside the base body (3), wherein the receiving unit (12) is arranged in particular at a central receiving and/or control point.

## Revendications

1. Gradateur rotatif (1) destiné à être fixé à un mur de bâtiment (2), comprenant un corps de base (3) qui peut être fixé de manière permanente au mur (2) et qui est conçu pour être relié électriquement à un système de commande de la lumière (4), et un élément de commande (5) qui est monté sur le corps de base (3) de manière à pouvoir tourner autour d'un axe (x), **caractérisé en ce qu'**un capteur est disposé à l'intérieur de l'élément de commande (5), qui est conçu pour détecter un mouvement de rotation de l'élément de commande (5), un dispositif électrique (6) étant prévu entre l'élément de commande (5) et le corps de base (3) pour transmettre l'information de position détectée par le capteur (5a), dans lequel l'élément de commande (5) est relié mécaniquement au corps de base (3) par un arbre rotatif (7), dans lequel l'axe (x) pour la rotation de l'élément de commande (5) est formé par l'axe de l'arbre rotatif (7), dans lequel le dispositif électrique (6) est formé comme un contact le long de l'arbre rotatif (7), **en ce que** des sections de contact électrique (6a, 6b) séparées électriquement les unes des autres sont formées sur l'enveloppe extérieure de l'arbre rotatif (7), sections de contact électrique (6a, 6b) par lesquelles l'élément de commande (5) est relié électriquement au corps de base (3) pour transmettre l'information de position.

2. Gradateur rotatif (1) selon la revendication 1, dans lequel le capteur (5a) est conçu comme un capteur d'accélération uniaxial, biaxial ou triaxial.

3. Gradateur rotatif (1) selon la revendication 1 ou 2, dans lequel le montage de l'élément de commande (5) et du dispositif électrique (6) est réalisé de telle sorte que l'élément de commande (5) peut être séparé du corps de base (3) et reconnecté à celui-ci sans être détruit.

4. Gradateur rotatif (1) selon l'une des revendications précédentes, dans lequel l'élément de commande rotatif (5) est conçu comme un bouton rotatif ou comme un disque rotatif.

5. Gradateur rotatif (1) selon l'une des revendications précédentes, dans lequel le dispositif électrique (6) est conçu de telle sorte qu'il permet un mouvement rotatif illimité de l'élément de commande (5) sans interrompre la connexion électrique du dispositif électrique (6).

6. Gradateur rotatif (1) selon l'une des revendications précédentes, dans lequel le capteur (5a) ou un dispositif d'évaluation (8) relié à celui-ci est configuré pour déterminer une position zéro pour la position de rotation, laquelle position zéro est déterminée par la position de l'élément de commande (5) dans laquelle une connexion électrique est fermée pour la première fois par le dispositif (6) entre l'élément de commande (5) et le corps de base (3) afin de mettre en service le gradateur rotatif (1), un mouvement de rotation et une commande associée à celui-ci étant déterminés par rapport à la position zéro.

7. Gradateur rotatif (1) selon l'une quelconque des revendications 1 à 5, dans lequel le capteur (5a) ou un dispositif d'évaluation (8) relié à celui-ci est configuré pour déterminer une position zéro pour la position de rotation, qui est déterminée exclusivement par la position de l'élément de commande (5) par rapport au champ de gravitation de la terre, un mouvement de rotation et une commande associée à celui-ci étant déterminés par rapport à la position zéro.

8. Gradateur rotatif (1) selon l'une des revendications précédentes, dans lequel l'élément de commande rotatif (5), en particulier également le contact électrique (6), est monté de manière élastique dans la direction axiale, dans lequel le capteur (5a) est également conçu pour détecter la grandeur d'une accélération le long de l'axe (x).

9. Gradateur rotatif (1) selon l'une des revendications précédentes, dans lequel la détermination de la position de l'élément de commande (5) est réalisée exclusivement par un seul capteur (5a).

10. Gradateur rotatif (1) selon l'une des revendications précédentes, dans lequel l'élément de commande (5) est exempt d'autres composants électriques à l'exception du capteur (5a) et du dispositif électrique (6).

11. Gradateur rotatif (1) selon l'une des revendications 1 à 9, dans lequel l'élément de commande (5) peut être utilisé en plus comme élément de télécommande mobile sans fil, en ce qu'à l'intérieur de l'élément de commande (5) sont disposés un accumulateur (10) pour l'alimentation du capteur de position et un module émetteur (11) pour la transmission sans fil de données à une unité réceptrice (12) qui est prévue pour la transmission de données à la commande de lumière (4), le dispositif électrique (6) étant conçu comme une connexion enfichable amovible non destructive.

12. Gradateur rotatif (1) selon la revendication 11, dans lequel l'unité de réception (12) est intégrée dans le corps de base (3) ou reliée à celui-ci.

13. Gradateur rotatif (1) selon la revendication 11, dans lequel l'unité de réception (12) est disposée à l'extérieur du corps de base (3), l'unité de réception (12) étant disposée notamment en un point central de réception et/ ou de commande.
